(19) **Europäisches Patentamt / European Patent Office / Office européen des brevets**

(11) **EP 3 350 254 B1**

(12) **FASCICULE DE BREVET EUROPEEN**

(45) Date de publication et mention
de la délivrance du brevet:
**11.03.2020 Bulletin 2020/11**

(21) Numéro de dépôt: **16774870.6**

(22) Date de dépôt: **09.09.2016**

(51) Int Cl.:
*C08L 27/12* (2006.01)    *C08K 3/14* (2006.01)

(86) Numéro de dépôt international:
**PCT/EP2016/071346**

(87) Numéro de publication internationale:
**WO 2017/046014 (23.03.2017 Gazette 2017/12)**

(54) **PROCEDE DE FABRICATION D'UN MATERIAU A BASE DE POLYMERE**

VERFAHREN ZUR HERSTELLUNG EINES POLYMERMATERIALS

PROCESS FOR THE FABRICATION OF A POLYMER BASED MATERIAL

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **16.09.2015 FR 1558700**

(43) Date de publication de la demande:
**25.07.2018 Bulletin 2018/30**

(73) Titulaire: **Nanomakers
78120 Rambouillet (FR)**

(72) Inventeur: **MAJOULET, Olivier
78000 Versailles (FR)**

(74) Mandataire: **IPAZ
Parc Les Algorithmes, Bâtiment Platon
CS 70003 Saint-Aubin
91192 Gif-sur-Yvette Cedex (FR)**

(56) Documents cités:
**US-A1- 2004 122 150    US-A1- 2009 170 998
US-A1- 2012 289 641**

• **SHUAI Z; LIU Z; WANG D; ZHOU P; LI W; QIAO Y;
LIU R; ZHOU S: "Preparation and mechanical
properties of micro- and nano-sized
SiC/fluoroelastomer composites", JOURNAL
WUHAN UNIVERSITY OF TECHNOLOGY,
MATERIALS SCIENCE EDITION, vol. 28, no. 4, 1
août 2013 (2013-08-01), pages 658-663,
XP002755027, DOI: 10.1007/s11595-013-0747-9
cité dans la demande**

EP 3 350 254 B1

**Description**

**Domaine technique**

La présente invention concerne un procédé de fabrication d'un matériau à base de polymère. Elle concerne aussi le matériau obtenu par un tel procédé.

Un tel procédé de fabrication permet par exemple de fabriquer un matériau à base de polymère ayant une bonne résistance à la rupture et/ou une faible déformation rémanente à la compression.

**Etat de la technique antérieure**

On connaît des procédés de fabrication de matériaux à base de polymère.

Par exemple, l'article intitulé « Preparation and Mechanical Properties of Micro- and Nano-sized SiC/Fluoroelastomer » paru dans le « Journal of Wuhan University of Technology-Mater » vol. 28 No.4 en août 2013 décrit un procédé de fabrication dans lequel on mélange un polymère (fluoroélastomère FKM) avec des particules (carbure de silicium SiC), et montre que l'incorporation des particules améliore certaines propriétés mécaniques du polymère comme sa résistance à la rupture par exemple.

Le document US 2009 / 17 09 98 décrit une composition thermoplastique comprenant un polymère polycarbonate et des particules de carbure de silicium.

Le but de la présente invention est de proposer un procédé de fabrication qui améliore encore plus certaines propriétés mécaniques d'un polymère par rapport à l'état de l'art.

**Exposé de l'invention**

Cet objectif est atteint avec un procédé de fabrication d'un matériau, procédé dans lequel on incorpore les produits suivants pour réaliser un mélange :

- un polymère,
- des particules comprenant du silicium et du carbone (de préférence des particules de carbure de silicium).

Selon un premier aspect de l'invention, lors de l'incorporation des particules, les particules peuvent avoir une densité apparente supérieure à 0,16 grammes par $cm^3$, de préférence supérieure à 0,2 grammes par $cm^3$, de manière optimale supérieure à 0,3 grammes par $cm^3$, idéalement supérieure à 0,4 grammes par $cm^3$.

Selon un deuxième aspect de l'invention, les particules ont de préférence un diamètre moyen inférieur ou égal à 100 nanomètres.

Ces deux aspects peuvent être envisagés seuls ou en combinaison : comme il est décrit par la suite, le faible diamètre des particules (de préférence avec un faible écart type) et une haute densité apparente des particules lors de l'incorporation des particules dans le mélange permettent tous les deux d'améliorer les performances mécaniques du matériau obtenu.

Les particules ont de préférence un diamètre moyen avec une déviation standard inférieure à 50% de ce diamètre moyen.

Les particules peuvent avoir un diamètre moyen supérieur ou égal à 15 nanomètres

Le polymère est de préférence un fluoropolymère, de préférence un fluoroélastomère (typiquement de type FKM ou FFKM).

Le polymère peut être un perfluoropolymère, de préférence un perfluoroélastomère.

Le mélange peut comprendre :

- 100 parties en masse du polymère, et
- au minium 0,01 partie en masse des particules et/ou au maximum 30 parties en masse des particules.

Les produits incorporés dans le mélange peuvent comprendre en outre du noir de carbone. Le mélange peut comprendre :

- 100 parties en masse du polymère, et
- au minium 0,01 partie en masse de noir de carbone et/ou au maximum 50 parties en masse de noir de carbone.

Les produits incorporés dans le mélange peuvent comprendre en outre un agent de couplage.

Les produits incorporés dans le mélange peuvent comprendre en outre un agent de démoulage.

Lors de l'incorporation des particules, la surface spécifique des particules est de préférence inférieure à 130 $m^2.g^{-1}$ (de préférence inférieure à 75 $m^2.g^{-1}$).

Suivant encore un autre aspect de l'invention, il est proposé un matériau obtenu avec un procédé de fabrication selon l'invention.

## Description des figures et modes de réalisation

D'autres avantages et particularités de l'invention apparaîtront à la lecture de la description détaillée de mises en œuvre et de modes de réalisation nullement limitatifs, et des dessins annexés suivants :

- la figure 1 illustre une distribution granulométrique des particules de SiC utilisées pour les échantillons n°2 et n°3 de matériau selon l'invention (en ordonnée, la fréquence correspond à un nombre de particules dans un intervalle de diamètre),
- la figure 2 illustre une distribution granulométrique des particules de SiC utilisées pour les échantillons n°4 et n°5 de matériau selon l'invention (en ordonnée, la fréquence correspond à un nombre de particules dans un intervalle de diamètre), et
- la figure 3 illustre une distribution granulométrique des particules de SiC utilisées pour les échantillons n°6 et n°7 de matériau selon l'invention (en ordonnée, la fréquence correspond à un nombre de particules dans un intervalle de diamètre).

Ces modes de réalisation étant nullement limitatifs, on pourra notamment considérer des variantes de l'invention ne comprenant qu'une sélection de caractéristiques décrites ou illustrées par la suite isolées des autres caractéristiques décrites ou illustrées (même si cette sélection est isolée au sein d'une phrase comprenant ces autres caractéristiques), si cette sélection de caractéristiques est suffisante pour conférer un avantage technique ou pour différencier l'invention par rapport à l'état de la technique antérieure. Cette sélection comprend au moins une caractéristique de préférence fonctionnelle sans détails structurels, et/ou avec seulement une partie des détails structurels si cette partie uniquement est suffisante pour

conférer un avantage technique ou à différencier l'invention par rapport à l'état de la technique antérieure.

On va tout d'abord décrire un premier mode de réalisation de procédé selon l'invention et des matériaux selon l'invention obtenus avec ce procédé.

Ce premier mode de réalisation selon l'invention est un procédé de fabrication d'un matériau solide.

Selon ce mode de réalisation, on incorpore les produits suivants pour réaliser un mélange :

- 100 parties en masse d'un polymère (de préférence un élastomère, de préférence un fluoropolymère ou fluoroélastomère, de préférence de type FKM ou FFKM) comprenant typiquement une base encore sous forme liquide ou pâteuse ou de poudre, ou de balle (par exemple dans le cas d'un élastomère)
- au minium 0,01 (de préférence 0,1) partie en masse des particules et/ou au maximum 30 (de préférence 25) parties en masse de particules comprenant du silicium et du carbone. Les particules sont de préférence des particules de carbure de silicium SiC ; de préférence avec :

  ◦ pour chaque particule 1 atome de silicium pour entre 0,9 et 1,0 atome de carbone et
  ◦ une teneur massique en oxygène inférieure à 0,8%
  ◦ de préférence une concentration en atome de fer inférieure à 40 ppm, de préférence à 5 ppm, de préférence à 4 ppm
  ◦ de préférence une concentration en atome de chrome inférieure à 20 ppm, de préférence à 2 ppm, de préférence à 1 ppm
  ◦ de préférence une concentration en atome de nickel inférieure à 5 ppm, de préférence à 1 ppm, de préférence à 0,5 ppm.

Lors de leur incorporation, les particules sont « fraiches », c'est-à-dire fabriquées (typiquement par pyrolyse laser) il y a moins de 2 mois.

Un polymère est une substance composée de molécules qui sont caractérisées par la répétition, plusieurs fois, d'un ou de plusieurs atomes ou groupes d'atomes.

Un élastomère est un polymère présentant des propriétés « élastiques » (typiquement module d'élasticité compris entre 0,001 et 0,1 GPa à 20°C et pression ambiante de 1 atmosphère), obtenues après réticulation.

On peut aussi ajouter de manière optionnelle dans le mélange un ou des agent(s) de réticulation ou vulcanisation du polymère, en fonction du polymère utilisé (cela peut être obligatoire selon le polymère, et il faut se référer à la notice d'utilisation de ce polymère).

On peut aussi ajouter de manière optionnelle dans le mélange un agent de couplage, par exemple du Si69 (tétrasulfure de bis-triéthoxy silylpropyl $C_{18}H_{42}O_6Si_2S_4$ ou de l'aminopropyl-triéthoxysilane). L'agent de couplage a pour fonction de créer un couplage ou une liaison entre le polymère et les particules comprenant carbone et silicium, de préférence tout en facilitant la dispersion des particules dans la matrice de l'élastomère. Par « agent de couplage », on entend un agent agencé pour créer des liaisons chimiques ou physiques entre les particules et le polymère, et qui a typiquement la formule chimique générale Y-T-X, avec Y un groupe fonctionnel agencé pour se lier physiquement ou chimiquement avec les particules, X un groupe fonctionnel agencé pour se lier physiquement ou chimiquement avec l'élastomère et T un groupe reliant les groupes X et Y ; on pourra voir des exemples d'agents de couplage dans la description du brevet US 7,202,295.

On peut aussi ajouter de manière optionnelle dans le mélange un agent de démoulage. Des exemples d'agents de démoulage apparaîtront facilement à l'homme de métier, et comprennent des acides gras de zinc, de calcium, de magnésium et les sels de lithium d'acides gras et les esters de phosphate organiques. Des exemples spécifiques comprennent l'acide stéarique, le stéarate de zinc, le stéarate de calcium, le stéarate de magnésium, le stéarate de lithium, l'oléate de calcium et le palmitate de zinc.

On peut aussi ajouter de manière optionnelle dans le mélange du noir de carbone, typiquement au minimum 0,01 (de préférence 0,1) partie en masse de noir de carbone et/ou au maximum 50 parties en masse de noir de carbone.

Après l'incorporation de ces différents produits dans le mélange, le polymère réticule (dans le cas d'un élastomère fourni sous forme de « balles » solides, cette réticulation est obtenue en outre sous l'effet simultané d'une chaleur et d'une contrainte en pression). De cette sorte, on obtient un matériau solide.

Le polymère est de préférence un fluoropolymère ou polymère fluoré, c'est-à-dire un polymère dont le motif de répétition est un fluorocarbure, et qui comprend donc plusieurs liaisons carbone-fluor. Ce fluoropolymère a de préférence une teneur en fluor supérieure ou égale à 62% en masse d'atomes de fluor (et/ou inférieure ou égale à 72%). Ce fluoropolymère est de préférence un fluoroélastomère c'est-à-dire un fluoropolymère présentant des propriétés élastiques, choisi de préférence parmi :

- un FKM (selon la norme ASTM D1418 dans sa version en vigueur au 1er août 2015 ou aussi appelé FPM selon la norme ISO(/DIN) 1629:1995 dans sa version en vigueur au 1er août 2015, pour « Fluorinated Propylene Monomer »), de préférence fabriqué à partir du fluorure de vinylidène (VDF ou VF2), parmi les cinq sous-catégories listées par la norme ASTM:

  ◦ FKM de type 1 : copolymère de l'hexafluoropropylène (HFP) et du fluorure de vinylidène (VDF ou VF2) ;
  ◦ FKM de type 2 : terpolymère du tétrafluoroéthylène (TFE), du fluorure de vinylidène (VDF ou VF2) et de l'hexafluoropropylène (HFP);
  ◦ FKM de type 3 : terpolymère du tétrafluoroéthylène (TFE), du perfluorométhylvinyléther (PMVE) et du fluorure de vinylidène (VDF ou VF2) ;
  ◦ FKM de type 4 : terpolymère du tétrafluoroéthylène (TFE), du propylène et du fluorure de vinylidène (VDF ou VF2) ;
  ◦ FKM de type 5 : pentapolymère du tétrafluoroéthylène (TFE), de l'hexafluoropropylène (HFP), de l'éthylène, du perfluorométhylvinyléther (PMVE) et du fluorure de vinylidène (VDF ou VF2).

- un FFKM (selon la norme ASTM D1418 dans sa version en vigueur au 1er août 2015 ou aussi appelé FFPM selon la norme ISO(/DIN) 1629:1995 dans sa version en vigueur au 1er août 2015) ou perfluoroélastomère ou polymère perfluoré (qui est donc un perfluoropolymère ou polymère perfluoré c'est-à-dire dont la chaîne carbonée est totalement fluorée), qui est généralement un terpolymères du tétrafluoroéthylène (TFE), du perfluorométhylvinyléther (PMVE) et d'un troisième monomère (autre que fluorure de vinylidène).
- un FEKM (selon la norme ASTM D1418 dans sa version en vigueur au 1er août 2015 ou aussi appelé FEPM selon la norme ISO(/DIN) 1629:1995 dans sa version en vigueur au 1er août 2015) qui est un copolymère du tétrafluoroéthylène (TFE) et de propylène.

Lors de l'incorporation des particules (c'est-à-dire juste avant que les particules n'entrent dans le mélange), les particules (typiquement sous forme de granules ou de grains ou forme pulvérulente ou de poudre) ont une densité apparente supérieure à 0,16 grammes par $cm^3$, de préférence supérieure à 0,2 grammes par $cm^3$, de manière optimale supérieure à 0,3 grammes par $cm^3$, idéalement supérieure à 0,4 grammes par $cm^3$ voire même supérieure ou égale à 0,45 grammes par $cm^3$. Ainsi, on privilégiera la forme de granules d'au moins $5.10^4$ $\mu m^3$ pour les particules lors de l'incorporation des particules.

La densité apparente $\rho$ (aussi appelée masse volumique apparente) est une grandeur bien connue et claire pour l'homme du métier. C'est une grandeur utilisée avec les substances se présentant sous forme de poudre ou de granulés, afin de rendre compte de la masse $M$ de matériau contenue dans un volume total donné $V_{tot}$, ce volume total

comprenant le volume d'air interstitiel entre les granulés ou particules ou grains de la poudre. De ce point de vue, la masse volumique apparente d'un même matériau granulé ou pulvérulent peut varier en fonction du mode de manutention, selon qu'il est plus ou moins tassé ou, au contraire, aéré :

$$\rho = \frac{M}{Vtot}$$

L'usage veut qu'on exprime généralement cette masse volumique apparente en grammes par centimètre cube (g.cm$^{-3}$).

Lors de l'incorporation des particules (c'est-à-dire juste avant que les particules n'entrent dans le mélange), les particules ont un diamètre moyen supérieur ou égal à 15 nanomètres et/ou inférieur ou égal à 100 nanomètres (voire même inférieur ou égal à 35 nanomètres).

Le diamètre moyen est de préférence calculé ou mesuré statistiquement selon une moyenne géométrique.

Le diamètre moyen est de préférence calculé ou mesuré par une analyse de granulométrie par morphologie mathématique (typiquement avec le logiciel ImageJ, cf Plateforme logicielle Cépia - Granulométrie par morphologie mathématique sous ImageJ. url : http://www.pfl-cepia.inra.fr/index.php?%20page=ijGranulometry).

Concernant la granulométrie par morphologie mathématique et l'utilisation de la moyenne géométrique, on pourra par exemple se référer à l'article de D. Legland et al. intitulé « Cartography of cell morphology in tomato pericarp at the fruit scale ». Journal of Microscopy vol. 247, pages 78-93 (2012), notamment à sa page 81.

Plus exactement, le diamètre moyen d'un type de particules est de préférence calculé statistiquement selon une moyenne géométrique, cette moyenne étant calculée sur plusieurs (au moins cent, de préférence plusieurs centaines) mesures de diamètre de différentes particules de ce type par analyse de granulométrie par morphologie mathématique.

Lors de l'incorporation des particules (c'est-à-dire juste avant que les particules n'entrent dans le mélange), les particules ont un diamètre moyen avec une déviation standard inférieure à 50% (de préférence 40%) de ce diamètre moyen.

L'écart type (aussi appelé déviation standard) de diamètre d'un type de particules est de préférence calculé selon la formule standard suivante détaillée par la suite, à partir de toutes les mesures de diamètre de différentes particules de ce type par analyse de granulométrie par morphologie mathématique (ayant servi au calcul de la moyenne de ce diamètre):

$$s = \left[ \sum_{i=1}^{n} g_i \cdot (x_i - m)^2 \right]^{1/2}$$

Description des échantillons 2 à 7 de matériaux obtenus selon l'invention et de l'échantillon 1 de référence.

On a mis en œuvre le premier mode de réalisation de procédé selon l'invention avec trois types de particules :

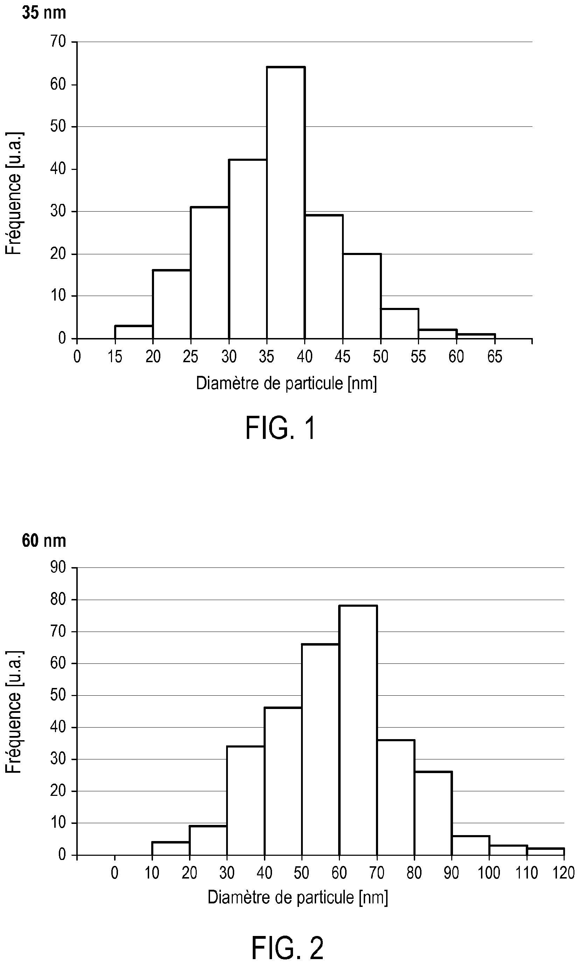

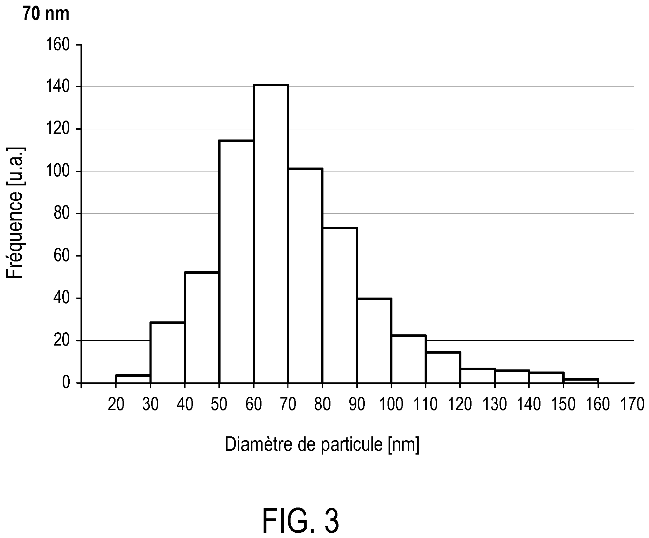

- type 1 : des particules de carbure de silicium de diamètre moyen 35 nanomètres, avec un écart type de 13 nanomètres (13/35 ≈ 37,1% du diamètre moyen), et dont une distribution granulométrique est illustrée en figure 1,
- type 2 : des particules de carbure de silicium de diamètre moyen 60 nanomètres, avec un écart type de 17 nanomètres (17/60 ≈ 28,3% du diamètre moyen), et dont une distribution granulométrique est illustrée en figure 2, et
- type 3 : des particules de carbure de silicium de diamètre moyen 70 nanomètres, avec un écart type de 21 nanomètres (21/70 ≈ 30% du diamètre moyen), et dont une distribution granulométrique est illustrée en figure 3.

On remarque que pour chacun de ces types de particules utilisées dans un procédé selon l'invention, il n'y a aucune particule de diamètre supérieur à 200 nanomètres.

On remarque même que pour le type 1 de particules utilisées dans un procédé selon l'invention, il n'y a aucune particule de diamètre supérieur à 100 nanomètres.

Les échantillons 1 (de référence) et 2 à 7 (selon l'invention) de matériau ont été obtenus par le premier mode de réalisation de procédé selon l'invention précédemment décrit, en incorporant les produits suivants pour réaliser le mélange :

- 100 parties en masse du polymère ; même si l'invention fonctionne pour d'autres polymères (et fonctionne en particulier très bien pour tous les FKM et FFKM), on utilise dans cette illustration toujours le même fluoropolymère : du Dyneon TM FC 2181, qui est un copolymère de fluorure de vinylidène et d'hexafluoropropylène. Ceci permet d'introduire le moins de variante possible entre les échantillons de manière à bien identifier par la suite les effets de la granulométrie et de la densité apparente sur les matériaux obtenus,

- 0 partie en masse de particules de SiC pour l'échantillon 1 (échantillon de référence) et 4 parties en masse de particules de SiC de type 1 pour les échantillons 2 et 3, de type 2 pour les échantillons 4 et 5 et de type 3 pour les échantillons 6 et 7. On a fait en outre varier la densité apparente des particules de SiC,

- 6 parties en masse d'hydroxyde de calcium et 3 parties en masse d'oxyde de magnésium pour la réticulation ou vulcanisation du polymère dans le mélange,

- 0,3 partie en masse de Struktol HT290 comme agent de démoulage,

- 0,2 partie en masse de tétrasulfure de bis-triéthoxy silylpropyl comme agent de couplage.

Pour les échantillons 1 à 7, le taux de remplissage du mélangeur (de référence Polylab Rheomix 3000) est toujours le même, et égal à 66%.

Le tableau 1 ci-dessous récapitule le type de particules de SiC utilisées pour chacun des échantillons 2 à 7 :

Tableau 1

| Particules SiC utilisées pour l'échantillon n° | Diamètre moyen des particules SiC [nm] | Ecart type de diamètre des particules SiC [nm] | Densité apparente des particules SiC lors de l'incorporation au mélange [g.cm³] | Taux de charge en particules SiC dans le mélange [pce = pour cent élastomères] |
|---|---|---|---|---|
| 1 | - | - | - | - |
| 2 | 35 | 13 | 0,045 | 4 |
| 3 | 35 | 13 | 0,45 | 4 |
| 4 | 60 | 17 | 0,175 | 4 |
| 5 | 60 | 17 | 0,45 | 4 |
| 6 | 70 | 21 | 0,125 | 4 |
| 7 | 70 | 21 | 0,195 | 4 |

Pour caractériser le diamètre moyen et l'écart type de diamètre des différentes particules SiC utilisées, on a analysé ces différents types ou lots de particules à l'aide un microscope électronique en transmission (MET) JEOL 2000EX opérant à une tension d'accélération de 200 kV. Les lots fournis sous forme de poudres nanométriques ont été préparés de la façon suivante : une pointe de spatule a été prélevée et dispersée dans de l'éthanol. Le mélange a ensuite été placé dans un bain à ultrasons durant 5 minutes pour obtenir une bonne dispersion. A l'aide d'une seringue, 10 µl du mélange ont été déposés sur une grille de cuivre de 400 mesh recouverte d'une membrane de formvar/C. Les grilles ainsi obtenues ont été observées dans le MET.

Pour chaque lot de particules SiC, une dizaine d'images ont été acquises. Pour la détermination de la distribution de taille, une analyse de granulométrie par morphologie mathématique sous ImageJ a été faite. Pour cela nous avons utilisé le plugin « ijGranulometry ».

Le principe de la granulométrie par morphologie mathématique est rappelé ci après. L'idée de la granulométrie par morphologie mathématique est d'appliquer à l'image des filtres définis par un élément structurant de forme donnée (ici un octogone), et dont la taille varie (cf P. Soille. « Morphological Image Analysis » 2nd. Springer, 2003). En mesurant les variations de l'image entre deux tailles de filtres, on construit des courbes qui informent sur la distribution de taille en niveaux de gris des structures observées.

En appliquant des ouvertures ou des fermetures de taille croissante, on fait disparaître des structures claires ou sombres de plus en plus grandes. On réalise ainsi un tamisage de l'image, en séparant les structures de l'image en fonction de leur taille. On mesure la différence entre les deux images en calculant la somme des niveaux de gris de chaque image. La courbe de la somme des niveaux de gris augmente ou diminue de manière monotone, et finit par atteindre un plateau. La dérivée de cette courbe correspond à une distribution des tailles des structures dans l'image. Mathématiquement, si $V_i$ est le volume (somme des niveaux de gris) de l'image à l'itération i, la courbe granulométrie correspondante est donnée par :

$$g_i = \frac{V_{i+1} - V_i}{V_\infty - V_0}$$

où $V_\infty$ correspond à la somme des niveaux de gris à stabilité, et $V_0$ à la somme des niveaux de gris dans l'image d'origine.

On constate que les courbes de granulométrie suivent souvent une loi log-normale. On peut calculer plusieurs paramètres synthétiques pour ces courbes, notamment la taille moyenne en niveaux de gris :

$$m = \sum_{i=1}^{n} g_i \cdot x_i$$

On peut aussi calculer l'écart-type de la distribution :

$$s = \left[ \sum_{i=1}^{n} g_i \cdot (x_i - m)^2 \right]^{1/2}$$

Enfin, du fait de l'allure des courbes, la valeur moyenne en niveaux de gris est souvent très éloignée du mode. Une alternative consiste donc à calculer une taille moyenne par la moyenne géométrique :

$$m_g = \exp \left[ \sum_{i=1}^{n} g_i \cdot \log x_i \right]$$

La densité vraie est mesurée avec un pycnomètre à hélium. Les échantillons sont dégazés pendant 4 heures à 120°C préalablement à toute mesure.

La densité apparente est mesurée selon la norme ISO 3923-2 :1981. Il s'agit de verser la matière (poudre ou granules) préalablement séchée pendant 4h à 120°C dans un cylindre de volume connu et égal à 25 cm$^3$ jusqu'à ce que ce dernier soit plein.

Le tableau 2 ci-dessous récapitule différentes propriétés physiques des différents types de particules de SiC utilisées pour chacun des échantillons 2 à 7 :

Tableau 2

| Particules SiC utilisées pour l'échantillon n° | 2 | 3 | 4 | 5 | 6 | 7 |
|---|---|---|---|---|---|---|
| diamètre moyen de particules SiC [nm] | 35 | 35 | 60 | 60 | 70 | 70 |
| densité apparente des particules SiC [g.cm$^{-3}$] | 0,045 | 0,45 | 0,175 | 0,45 | 0,125 | 0,195 |
| Surface spécifique - par méthode Brunauer-Emmett-Teller (BET) [m$^2$.g$^{-1}$] | 56 | 59 | 27 | 28 | 20 | 21 |
| densité vraie par pycnométrie He [g.cm$^{-3}$] | 3,1 | 3,1 | 3,2 | 3,2 | 3,2 | 3,2 |

On remarque que, lors de l'incorporation des particules (c'est-à-dire juste avant que les particules n'entrent dans le mélange), la surface spécifique des particules est supérieure à 15 m$^2$.g$^{-1}$ et/ou inférieure à 130 m$^2$.g$^{-1}$ (de préférence inférieure à 75 m$^2$.g$^{-1}$).

Le tableau 3 ci-dessous résume différentes propriétés rhéologiques à 177°C des échantillons 1 à 7 selon la norme ASTM D 2084 à partir d'un rhéomètre Monsanto ("Monsanto Moving Die Rheometer" de référence MDR 2000 de Alpha Technologies en utilisant les paramètres suivants: 100 cycles par minute (1,66 Hz), 0,5 degré en amplitude).

Tableau 3

| N° d'échantillon | ML= couple minimum [dN.m] | MH= couple maximum [dN.m] | Ts2 = temps pour observer un augmentation de 2 "inch-lb" (équivalents en unité SI à 2,26dN.m) par rapport au couple minimum [min] | T90 = temps pour obtenir 90% de réticulation [min] | Temps de réticulation [min] |
|---|---|---|---|---|---|
| 1 | 1,1 | 11,6 | 1 | 1,5 | 6 |
| 2 | 1,3 | 12,1 | 0,8 | 1,2 | 6 |
| 3 | 1,5 | 14,1 | 0,9 | 1,2 | 6 |
| 4 | 1,2 | 12,5 | 0,9 | 1,3 | 6 |
| 5 | 1,2 | 12,4 | 0,9 | 1,3 | 6 |
| 6 | 1,2 | 12,4 | 0,9 | 1,3 | 6 |
| 7 | 1,2 | 12,5 | 0,9 | 1,3 | 6 |

Le tableau 4 ci-dessous résume différentes propriétés mécaniques des échantillons 1 à 7 après réticulation.

Tableau 4

| N° d'échant illon | Dureté [Shore A] | M50 = module à 50% d'élongation [MPa] | M100 = module à 100% d'élongation [MPa] | M200 = module à 200% d'élongation [MPa] | RàR = résistance à la rupture [MPa] | AàR allongement à la rupture [%] | DRC = Déformation rémanente à la compression [%] |
|---|---|---|---|---|---|---|---|
| 1 | 58 ± 0,3 | 1,1 ± 0,1 | 1,8 ± 0,1 | 5,6 ± 0,2 | 11,7 ± 0,8 | 316 ± 12 | x |
| 2 | 61 ± 0,2 | 1,3 ± 0,1 | 2,3 ± 0,1 | 7 ± 0,2 | 12,2 ± 1 | 294 ± 30 | 6 ± 0,05% |
| 3 | 65 ± 0,2 | 1,6 ± 0,1 | 3,4 ± 0,1 | 11,2 ± 0,1 | 15,6 ± 1 | 249 ± 25 | 5 ± 0,15% |
| 4 | 62 ± 0,3 | 1,3 ± 0,1 | 2,4 ± 0,1 | 7,2 ± 0,2 | 11,8 ± 0,7 | 286 ± 30 | 6 ± 0,51% |
| 5 | 62 ± 0,2 | 1,3 ± 0,1 | 2,3 ± 0,1 | 6,8 ± 0,2 | 12 ± 1 | 293 ± 29 | 6 ± 0,21% |
| 6 | 61 ± 0,3 | 1,3 ± 0,1 | 2,3 ± 0,1 | 7 ± 0,2 | 11,2 ± 1 | 283 ± 20 | 7 ± 0,24% |
| 7 | 61 ± 0,3 | 1,2 ± 0,1 | 2,1 ± 0,1 | 6,6 ± 0,1 | 11,3 ± 1 | 285 ± 23 | 7 ± 0,5% |

On remarque que deux facteurs permettent d'améliorer les propriétés mécaniques du matériau obtenu :

- une faible granulométrie (faible diamètre moyen et de préférence faible écart type), comme illustré par les différences de valeurs de Dureté, M100, M200, RàR et DRC entre les échantillons 3 et 5,

- une haute densité apparente, comme illustré par les différences de valeurs de Dureté, M100, M200, RàR et DRC entre les échantillons 2 et 3. Cet effet technique surprenant est obtenu surtout pour de petites particules, ayant de préférence un diamètre moyen inférieur à 50 nm, de préférence inférieur ou égal à 35 nm.

Les avantages de l'invention par rapport à l'état de l'art sont significatifs :

- selon l'invention, on améliore de 33% la résistance à la rupture (RàR) entre l'échantillon 1 sans particules de SiC et l'échantillon 3 qui comprend 4 parties en masse de SiC pour 100 parties de polymère ; et
- selon l'état de l'art (« Préparation and Mechanical Properties of Micro- and Nano-sized SiC/Fluoroelastomer » , Journal of Wuhan University of Technology-Mater, vol. 28 No.4, 2013), une utilisation pourtant légèrement plus importante de SiC (5 parties en masse pour 100 parties de polymère) ne permet d'améliorer que de 7% la résistance à la rupture (voir tableau en bas de page n°660 de cet article, comparaison de la « Tensile strength » entre les échantillons FKM-0 et FKM-5).

Utilisation optionnelle de noir de carbone

D'autres échantillons ont été réalisés en ajoutant dans le mélange (par rapport aux échantillons 2 à 7) 9 ou 18 parties en masse de noir de carbone, avec le même taux de remplissage du mélangeur que pour les échantillons 1 à 7. Cela permet encore d'améliorer les propriétés mécaniques, mais de manière moins coûteuse que si l'on ajoutait encore 9 ou 18 parties en masse de particules de SiC.

Bien sûr, l'invention n'est pas limitée aux exemples qui viennent d'être décrits et de nombreux aménagements peuvent être apportés à ces exemples sans sortir du cadre de l'invention.

Bien entendu, les différentes caractéristiques, formes, variantes et modes de réalisation de l'invention peuvent être associées les unes avec les autres selon diverses combinaisons dans la mesure où elles ne sont pas incompatibles ou exclusives les unes des autres. En particulier toutes les variantes et modes de réalisation décrits précédemment sont combinables entre eux.

**Revendications**

1. Procédé de fabrication d'un matériau, procédé dans lequel on incorpore les produits suivants pour réaliser un mélange :

    - un polymère,
    - des particules comprenant du silicium et du carbone, et ayant un diamètre moyen inférieur ou égal à 100 nanomètres par une analyse de granulométrie par morphologie mathématique selon une moyenne géométrique, **caractérisé en ce que**, lors de l'incorporation des particules, les particules ont une densité apparente supérieure à 0,3 grammes par centimètre cube selon la norme ISO 3923-2 :1981.

2. Procédé selon la revendication 1, **caractérisé en ce que** l'on a pour chaque particule 1 atome de silicium pour entre 0,9 et 1,0 atome de carbone

3. Procédé selon la revendication 1 ou 2, **caractérisé en ce que** les particules ont :

    - une concentration en atome de fer inférieure à 40 ppm, et/ou
    - une concentration en atome de chrome inférieure à 20 ppm, et/ou
    - une concentration en atome de nickel inférieure à 5 ppm.

4. Procédé selon l'une quelconque des revendications précédentes, **caractérisé en ce que**, lors de l'incorporation des particules, les particules ont une densité apparente supérieure à 0,4 grammes par $cm^3$.

5. Procédé selon l'une quelconque des revendications précédentes, **caractérisé en ce que** les particules ont un diamètre moyen supérieur ou égal à 15 nanomètres.

**6.** Procédé selon l'une quelconque des revendications précédentes, **caractérisé en ce que** les particules ont un diamètre moyen avec une déviation standard inférieure à 50% de ce diamètre moyen.

**7.** Procédé selon l'une quelconque des revendications précédentes, **caractérisé en ce que** le polymère est un fluoropolymère, de préférence un fluoroélastomère.

**8.** Procédé selon la revendication 7, **caractérisé en ce que** le polymère est un perfluoropolymère, de préférence un perfluoroélastomère.

**9.** Procédé selon l'une quelconque des revendications précédentes, **caractérisé en ce que** le mélange comprend :

- 100 parties en masse du polymère, et
- au minium 0,01 partie en masse des particules et/ou au maximum 30 parties en masse des particules.

**10.** Procédé selon l'une quelconque des revendications précédentes, **caractérisé en ce que** les produits incorporés dans le mélange comprennent en outre du noir de carbone.

**11.** Procédé selon la revendication 10, **caractérisé en ce que** le mélange comprend :

- 100 parties en masse du polymère, et
- au minium 0,01 partie en masse de noir de carbone et/ou au maximum 50 parties en masse de noir de carbone.

**12.** Procédé selon l'une quelconque des revendications précédentes, **caractérisé en ce que** les produits incorporés dans le mélange comprennent en outre un agent de couplage.

**13.** Procédé selon l'une quelconque des revendications précédentes, **caractérisé en ce que** les produits incorporés dans le mélange comprennent en outre un agent de démoulage.

**14.** Procédé selon l'une quelconque des revendications précédentes, **caractérisé en ce que**, lors de l'incorporation des particules, la surface spécifique des particules est inférieure à 130 $m^2.g.^{-1}$

**15.** Matériau obtenu avec un procédé de fabrication selon l'une quelconque des revendications précédentes.

**Patentansprüche**

**1.** Verfahren zum Herstellen eines Materials, bei welchem Verfahren die folgenden Stoffe zum Herstellen eines Gemischs eingearbeitet werden:

- ein Polymer,
- Teilchen, die Silizium und Kohlenstoff enthalten und einen mittleren Durchmesser kleiner oder gleich 100 Nanometer haben, der bestimmt ist durch eine Teilchengrößenanalyse durch mathematische Morphologie gemäß einem geometrischen Mittelwert,
**dadurch gekennzeichnet, dass** die Teilchen bei der Einarbeitung der Teilchen eine Schüttdichte von über 0,3 Gramm pro Kubikzentimeter gemäß der Norm ISO 3923-2: 1981 haben.

**2.** Verfahren nach Anspruch 1, **dadurch gekennzeichnet, dass** für jedes Teilchen 1 Atom Silizium auf zwischen 0,9 bis 1,0 Atome Kohlenstoff vorliegt.

**3.** Verfahren nach Anspruch 1 oder 2, **dadurch gekennzeichnet, dass** die Teilchen

- eine Eisenatomkonzentration von weniger als 40 ppm und/oder
- eine Chromatomkonzentration von weniger als 20 ppm und/oder
- eine Nickelatomkonzentration von weniger als 5 ppm aufweisen.

**4.** Verfahren nach einem der vorangehenden Ansprüche, **dadurch gekennzeichnet, dass** bei der Einarbeitung der Teilchen die Teilchen eine Schüttdichte von über 0,4 Gramm pro $cm^3$ haben.

5. Verfahren nach einem der vorangehenden Ansprüche, **dadurch gekennzeichnet, dass** die Teilchen einen mittleren Durchmesser größer oder gleich 15 Nanometer haben.

6. Verfahren nach einem der vorangehenden Ansprüche, **dadurch gekennzeichnet, dass** die Teilchen einen mittleren Durchmesser mit einer Standardabweichung von weniger als 50% von diesem mittleren Durchmesser haben.

7. Verfahren nach einem der vorangehenden Ansprüche, **dadurch gekennzeichnet, dass** das Polymer ein Fluorpolymer, vorzugsweise ein Fluorelastomer, ist.

8. Verfahren nach Anspruch 7, **dadurch gekennzeichnet, dass** das Polymer ein Perfluorpolymer, vorzugsweise ein Perfluorelastomer, ist.

9. Verfahren nach einem der vorangehenden Ansprüche, **dadurch gekennzeichnet, dass** das Gemisch enthält:

   - 100 Massenteile des Polymers und
   - mindestens 0,01 Massenteile der Teilchen und/oder höchstens 30 Massenteile der Teilchen.

10. Verfahren nach einem der vorangehenden Ansprüche, **dadurch gekennzeichnet, dass** die in das Gemisch eingearbeiteten Stoffe ferner Ruß enthalten.

11. Verfahren nach Anspruch 10, **dadurch gekennzeichnet, dass** das Gemisch enthält:

   - 100 Massenteile des Polymers und
   - mindestens 0,01 Massenteile Ruß und/oder höchstens 50 Massenteile Ruß.

12. Verfahren nach einem der vorangehenden Ansprüche, **dadurch gekennzeichnet, dass** die in das Gemisch eingearbeiteten Stoffe ferner einen Haftvermittler enthalten.

13. Verfahren nach einem der vorangehenden Ansprüche, **dadurch gekennzeichnet, dass** die in das Gemisch eingearbeiteten Stoffe ferner ein Formtrennmittel enthalten.

14. Verfahren nach einem der vorangehenden Ansprüche, **dadurch gekennzeichnet, dass** bei der Einarbeitung der Teilchen die spezifische Oberfläche der Teilchen kleiner als 130 m$^2$.g$^{-1}$ ist.

15. Material, das mit einem Herstellungsverfahren nach einem der vorangehenden Ansprüche erhalten wird.

**Claims**

1. Method for the production of a material, method in which the following products are incorporated in order to produce a mixture:

   - a polymer,
   - particles comprising silicon and carbon, and having an average diameter less than or equal to 100 nanometres by granulometric analysis using mathematical morphology according to a geometrical average, **characterized in that**, on incorporation of the particles, the particles have an apparent density greater than 0.3 grams per cubic centimetre according to the standard ISO 3923-2:1981.

2. Method according to claim 1, **characterized in that** for each particle there is 1 atom of silicon for between 0.9 and 1.0 atoms of carbon.

3. Method according to claim 1 or 2, **characterized in that** the particles have:

   - a concentration of iron atoms less than 40 ppm, and/or
   - a concentration of chromium atoms less than 20 ppm, and/or
   - a concentration of nickel atoms less than 5 ppm.

4. Method according to any one of the preceding claims, **characterized in that**, on incorporation of the particles, the particles have an apparent density greater than 0.4 grams per cm$^3$.

5. Method according to any one of the preceding claims, **characterized in that** in the particles have an average diameter greater than or equal to 15 nanometres.

6. Method according to any one of the preceding claims, **characterized in that** the particles have an average diameter with a standard deviation less than 50% of this average diameter.

7. Method according to any one of the preceding claims, **characterized in that** in the polymer is a fluoropolymer, preferably a fluoroelastomer.

8. Method according to claim 7, **characterized in that** in the polymer is a perfluoropolymer, preferably a perfluoroelastomer.

9. Method according to any one of the preceding claims, **characterized in that** the mixture comprises

   - 100 parts by weight of the polymer, and
   - a minimum of 0.01 parts by weight of the particles and/or a maximum of 30 parts by weight of the particles.

10. Method according to any one of the preceding claims, **characterized in that** the products incorporated in the mixture also comprise carbon black.

11. Method according to claim 10, **characterized in that** the mixture comprises:

   - 100 parts by weight of the polymer, and
   - a minimum of 0.01 parts by weight of carbon black and/or a maximum of 50 parts by weight of carbon black.

12. Method according to any one of the preceding claims, **characterized in that** the products incorporated in the mixture also comprise a bonding agent.

13. Method according to any one of the preceding claims, **characterized in that** the products incorporated in the mixture also comprise a mould release agent.

14. Method according to any one of the preceding claims, **characterized in that**, on incorporation of the particles, the specific surface area of the particles is less than 130 $m^2.g^{-1}$.

15. Material obtained with a production method according to any one of the preceding claims.

**35 nm**

FIG. 1

**60 nm**

FIG. 2

FIG. 3

## RÉFÉRENCES CITÉES DANS LA DESCRIPTION

**Documents brevets cités dans la description**

- US 2009170998 A

- US 7202295 B

**Littérature non-brevet citée dans la description**

- Preparation and Mechanical Properties of Micro- and Nano-sized SiC/Fluoroelastomer. *Journal of Wuhan University of Technology-Mater,* Août 2013, vol. 28 (4
- **D. LEGLAND et al.** Cartography of cell morphology in tomato pericarp at the fruit scale. *Journal of Microscopy,* 2012, vol. 247, 78-93
- **P. SOILLE.** Morphological Image Analysis. Springer, 2003
- Préparation and Mechanical Properties of Micro- and Nano-sized SiC/Fluoroelastomer. *Journal of Wuhan University of Technology-Mater,* 2013, vol. 28 (4